# EUROPÄISCHE PATENTSCHRIFT

(11) **EP 1 204 688 B1**
(45) Veröffentlichungstag und Bekanntmachung des Hinweises auf die Patenterteilung: **02.05.2003**
(21) Anmeldenummer: 00954599.7
(22) Anmeldetag: 08.08.2000
(51) Int. Cl.: C08G 18/10, C08G 18/08

(54) **THERMOPLASTISCHE POLYURETHANE**
THERMOPLASTIC POLYURETHANES
POLYURETHANNES THERMOPLASTIQUES

(30) Priorität: 18.08.1999 DE 19939112
(43) Veröffentlichungstag der Anmeldung: 15.05.2002
(60) Teilanmeldung: 02019574.9
(73) Patentinhaber: BASF AKTIENGESELLSCHAFT, 67056 Ludwigshafen (DE)
(72) Erfinder: KRECH, Ruediger, D-49356 Diepholz (DE); MUELLER, Juergen, D-49453 Wetschen (DE); POHLMANN, Norbert, D-49638 Nortrup (DE); SELLIG, Paul, D-49448 Lemförde (DE); STEINBERGER, Rolf, D-49143 Schledehausen (DE)
(86) Internationale Anmeldenummer: EP0007655
(87) Internationale Veröffentlichungsnummer: WO01012692

(56) Entgegenhaltungen:
- EP-A- 0 417 553
- EP-A- 0 571 831
- DE-A- 2 051 027
- US-A- 5 026 814
- US-A- 5 739 250

## Beschreibung

Die Erfindung bezieht sich auf thermoplastische Polyurethane mit einer Shore-Härte von 45 A bis 80 A, bevorzugt 45 A bis 71 A, einer Zugfestigkeit nach DIN 53504 von größer 15, bevorzugt 18 bis 40 MPa, einer Weiterreißfestigkeit nach DIN 53515 von größer 30, bevorzugt 35 bis 60 N/mm und einem Abrieb nach DIN 53516 von kleiner 250, bevorzugt 150 bis 40 mm³, basierend auf der Umsetzung von thermoplastischen Polyurethanen mit einer Shore-Härte von 30 D bis 80 D, einem Diol (c), das ein Molekulargewicht von 62 bis 700 g/mol aufweist, einem Isocyanat (a) sowie Katalysatoren (d) und gegenüber Isocyanaten reaktiven Verbindungen (b) mit einem Molekulargewicht von 701 bis 8000. Des weiteren betrifft die Erfindung Verfahren zur Herstellung von thermoplastischen Polyurethanen mit einer Shore-Härte von 45 bis 80 A sowie die mit diesem Verfahren herstellbaren thermoplastischen Polyurethane.

Thermoplastische Polyurethane, im Folgenden auch als TPU bezeichnet, und Verfahren zu deren Herstellung sind allgemein bekannt und vielfältig beschrieben. Diese TPU sind teilkristalline Werkstoffe und gehören zu der Klasse der thermoplastischen Elastomere. Sie zeichnen sich unter anderem durch gute Festigkeiten, Abriebe, Weiterreißfestigkeiten und Chemikalienbeständigkeit aus, und können in nahezu beliebiger Härte durch geeignete Rohstoffzusammensetzung hergestellt werden. Zusätzlich bieten sie Vorteile durch die kostengünstige Herstellung, beispielsweise mit dem Band- oder dem Extruderverfahren, die kontinuierlich durchgeführt werden können, und die einfache Thermoplastverarbeitung.

Thermoplastisch verarbeitbare Polyurethanelastomere auf Basis aromatischer Diisocyanate werden üblicherweise nach zwei kontinuierlichen Verfahren, dem Band- und dem Extruder-Verfahren, hergestellt. Härte und Kristallinität sowie das Verarbeitungsverhalten lassen sich dabei durch das Molverhältnis Kettenverlängerer/Polyol in einfacher Weise beeinflussen und variieren. Strebt man jedoch einen Härtebereich Shore < 80 A an, so sinkt hauptsächlich wegen der geringen Mengen an Kettenverlängerern die Reaktionsgeschwindigkeit, die Produkte werden klebrig, schlecht kristallisierend und schwierig bzw. überhaupt nicht mehr im Spritzguß oder in der Extrusion verarbeitbar. Eine Methode, weichere TPU mit Härten bis zu Shore 60 A zu erreichen, ist der Zusatz von 20 bis 40 % Weichmacher, ausgehend von einem TPU mit Härte Shore 85 bis 90 A. Diese weichgemachten TPU sind gut kristallisierend und gut verarbeitbar, zeigen jedoch, wie alle weichgemachten Kunststoffe, gewisse Nachteile durch die Verwendung der Weichmacher, z.B. Weichermacherausblutung und -geruch.

Weitere Versuche, weichere TPU herzustellen, bestanden darin, die Struktur der TPU-Polymerkette, insbesondere die Größe der sog. Hartphasenblöcke, durch Bildung von Präpolymeren aus langkettigen Polyolen und Überschuß an Diisocyanat und anschließende Umsetzung 5 mit einem niedermolekularen Diol als Kettenverlängerer zu verändern.

Beispielsweise werden in der EP 571 828 langkettiges Polyol mit einem Überschuß an MDI zu einem Präpolymer umgesetzt, das anschließend mit Butandiol-1,4 als Kettenverlängerer zu einem hochmolekularen TPU mit einer Shore-Härte von 85 A bis 98 A umgesetzt wird. In der Schrift DE-A 196 259 87 wird dieses Prinzip weitergehend modifiziert.

Gemäß DE-A 28 54 409 werden vorgefertigte thermoplastische Polymere, wie z.B. auch TPU, im Gehäuse 1 eines Extruders dosiert, während im Gehäuse 2 oder in weiteren Gehäusen lineare Polyole, Kettenverlängerer und aromatische Diisocyanate eingespeist werden. Eine Umsetzung oder gar eine gezielte Spaltung des TPU mit Kettenverlängerungsmitteln zur gezielten Bereitstellung von gut kristallisierenden Hartphasen ist nach dieser technischen Lehre nicht möglich, da die gegenüber Isocyanaten reaktiven Verbindungen sofort mit dem gleichzeitig zugeführten Isocyanat reagieren. Ein derartiges Verfahren führt praktisch zu einer bloßen Mischung eines vorgefertigten hochmolekularen TPU mit einer hochmolekularen Weichphase aus Polyol, MDI und Kettenverlängerer.

Ziel der vorliegenden Erfindung war es somit, thermoplastische Polyurethane mit einer Shore-Härte von 45 A bis 80 A zu entwickeln, die ohne die Verwendung von Weichmachern über verbesserte mechanische Eigenschaften, insbesondere erhöhte Zugfestigkeiten und Weiterreißfestigkeiten und einen verminderten Abrieb verfügen. Die TPU sollten zudem hervorragend zur Verarbeitung durch Spritzguß oder Extrusion geeignet sein. Des weiteren sollten Verfahren zur Herstellung derartiger thermoplastischen Polyurethanen mit einer Shore-Härte von 45 bis 80 A entwickelt werden.

Diese Aufgabe konnten durch die eingangs dargestellten thermoplastischen Polyurethane sowie die an späterer Stelle aufgeführten Verfahren gelöst werden.

Die erfindungsgemäßen thermoplastischen Polyurethane basieren auf der Umsetzung von thermoplastischen Polyurethanen mit einer Shore-Härte von 30 D bis 80 D, bevorzugt 40 D bis 80 D, besonders bevorzugt 40 D bis 70 D, einem Diol (c), das ein Molekulargewicht von 62 bis 700, bevorzugt 62 bis 250 g/mol aufweist, einem Isocyanat (a) sowie gegebenenfalls Katalysatoren (d) und/ oder (b) gegenüber Isocyanaten reaktiven Verbindungen mit einem Molekulargewicht von 701 bis 8000.

Besonders bevorzugt stellen die erfindungsgemäßen TPU Produkte der Reaktion eines Gemisches enthaltend 15 bis 50 Gew.-% der harten, thermoplastischen Polyurethane, mit einem Härtebereich 30 D bis 80 D, 0,15 bis 3,0 Gew.-% (c) und 84,85 bis 47 Gew.-% der Summe aus (a) und gegebenenfalls (b), wobei die Gewichtsangaben auf das Gesamtgewicht des Gemisches bezogen sind.

Das erfindungsgemäße Verfahren zur Herstellung der thermoplastischen Polyurethane mit einer Shore-Härte von 45 A bis 80 A erfolgt derart, daß man in einem ersten Schritt (i) ein thermoplastisches Polyurethan mit einem Diol (c), das ein Molekulargewicht von 62 bis 700, bevorzugt 62 bis 250 g/mol aufweist, umsetzt und anschließend in einem weiteren Umsetzungsschritt (ii) das Umsetzungsprodukt aus (i) mit einem Isocyanat (a) sowie gegebenenfalls (b)gegenüber Isocyanaten reaktiven Verbindungen mit einem Molekulargewicht von 701 bis 8000, (c) Diolen mit einem Molekulargewicht von 62 bis 700, bevorzugt 62 bis 250, (d) Katalysatoren und/oder (e) Hilfs- und/oder Zusatzstoffen, bevorzugt mit (b)gegenüber Isocyanaten reaktiven Verbindungen mit einem Molekulargewicht von 701 bis 8000, umsetzt. Während durch den Schritt (i) die Hartphasen durch das im Schritt (i) eingesetzte TPU für das Endprodukt zur Verfügung gestellt werden, erfolgt, insbesondere durch den bevorzugten Einsatz der Komponente (b), > im Schritt (ii) der Aufbau der Weichphasen.

Die erfindungsgemäße technische Lehre besteht darin, daß TPU im Härtebereich Shore 30 D bis 80 D mit einer ausgeprägten, gut kristallisierenden Hartphasenstruktur in einem Reaktionsextruder aufgeschmolzen und mit einem niedermolekularen Diol zunächst abgebaut wird zu einem Präpolymeren mit Hydroxylendgruppen. Hierbei bleibt die ursprüngliche, gut kristallisierende Hartphasenstruktur weitgehend erhalten und kann anschließend genutzt werden, um weichere TPU mit den vorteilhaften Eigenschaften des harten TPU zu erhalten, als da sind gut rieselfähige und dosierbare Granulatstruktur, gutes Entformungsverhalten und rasche Verarbeitbarkeit im Spritzguß.

Als Ausgangsprodukt, d.h. als thermoplastisches Polyurethan, das in dem Schritt (i) bevorzugt in geschmolzenem Zustand besonders bevorzugt bei einer Temperatur von 200 bis 250 °C bevorzugt für eine Dauer von 0,1 bis 4, besonders bevorzugt 0,1 bis 1 min mit (c) umgesetzt wird, können allgemein bekannte thermoplastische Polyurethane, beispielsweise in granulierter Form eingesetzt werden. Diese TPU weisen eine Shore-Härte von 30 D bis 80 D auf, da TPU dieser Härte über eine ausgeprägte, gut kristallisierende Hartphasenstruktur verfügen. Das in dem Schritt zu verwendende TPU kann auf den an späterer Stelle dargestellten Ausgangskomponenten (a), (b) und gegebenenfalls (c), (d) und/oder (e) basieren und nach allgemein bekannten Verfahren, beispielsweise dem one-shot- oder dem Prepolymer-Verfahren auf Bandanlagen oder Reaktionsextrudern gefertigt sein.

Das Gewichtsverhältnis von TPU zur Komponente (c) in dem Schritt (i) beträgt üblicherweise 100 : 0,5 bis 100 : 10, bevorzugt 100 : 1 bis 100 : 5.

Die Umsetzung des TPU mit dem kurzkettigen Diol (c) in dem Umsetzungsschritt (i) wird in Gegenwart von üblichen Katalysatoren (d), beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht der Komponente (c) durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Der Schritt (i) wird bevorzugt in einem üblichen Reaktionsextruder durchgeführt wird. Derartige Reaktionsextruder sind allgemein bekannt und beispielhaft in den Firmenschriften von Werner & Pfleiderer oder in der DE-A 2 302 564 beschrieben. Besonders bevorzugt weist der Reaktionsextruder in dem Bereich, in dem das thermoplastische Polyurethan geschmolzen wird, neutrale und/oder rückwärtsfördernde Knetblöcke und Rückförderelemente sowie in dem Bereich, in dem das thermoplastische Polyurethan mit (c) umgesetzt wird, Schneckenmischelemente, Zahnscheiben und/oder Zahnmischelemente in Kombination mit Rückförderelementen auf.

Durch die Umsetzung des TPU mit (c) in dem Schritt (i) wird die Polymerkette des TPU durch (c) gespalten. Das Umsetzungsprodukt des TPU weist deshalb freie Hydroxylendgruppen auf und wird erfindungsgemäß in dem weiteren Schritt (ii) zu dem eigentlichen Produkt, dem TPU mit der erfindungsgemäßen Härte, weiterverarbeitet.

Die Umsetzung des Reaktionsproduktes aus dem Schritt (i) in dem Schritt (ii) erfolgt erfindungsgemäß durch Zugabe von Isocyanaten (a) und bevorzugt von gegenüber über Isocyanaten reaktive Verbindungen (b) mit einem Molekulargewicht von 701 bis 8000 zu dem Reaktionsprodukt. Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 200 bis 240 °C bevorzugt für ein Dauer von 0,5 bis 5, bevorzugt 0,5 bis 2 min bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d.h. späteren Gehäusen, nach der Zugabe der Komponenten (a) und (b), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung kann in dem Schritt (ii) in Gegenwart (b) gegenüber Isocyanaten reaktiven Verbindungen mit einem Molekulargewicht von 701 bis 8000, (d) Katalysatoren und/oder (e) Hilfsund/oder Zusatzstoffen erfolgen, die an späterer Stelle beispielhaft beschrieben werden. Der Rest der Komponente (c), der in dem Schritt (i) nicht mit dem TPU reagiert hat, kann ebenfalls in dem Schritt (ii) vorliegen. Aufgrund der hervorragenden Eigenschaften der erfindungsgemäßen TPU ist der Einsatz von Weichmachern nicht notwendig, sie können aber auf Wunsch verwendet werden. Besonders bevorzugt unterscheidet sich die Komponente (b), die im Schritt (ii) bevorzugt eingesetzt werden kann, in der chemischen Struktur von dem Polyol, das zur Herstellung des im Schritt (i) eingesetzten thermoplastischen Polyurethans verwendet wird. Wie bereits dargestellt, basiert auch das in dem Schritt (i) eingesetzte TPU auf der Umsetzung von Isocyanaten (a) mit gegenüber Isocyanaten reaktiven Polyolen (b). Der Unterschied kann z.B. darin bestehen, daß das ein Polyol ein Polyetherpolyol darstellt, während das andere Polyol ein Polyesterpolyol ist. Derartige Unterschiede in den Komponenten (b) mindern oder unterdrücken die Kristallisationstendenzen der gebildeten Weichphase.

Die Umsetzung in dem Schritt (ii) erfolgt bevorzugt bei einem Überschuß der Isocyanatgruppen zu den gegenüber Isocyanaten reaktiven Gruppen. Bevorzugt beträgt das Verhältnis der Isocyanatgruppen der Komponente (a) zu den Hydroxylgruppen der in den Schritten (i) und (ii) zugeführten Komponenten (b) und (c) 1,02 : 1 bis 1,2 : 1, besonders bevorzugt 1,1 : 1.

Das erfindungsgemäße, bevorzugt kontinuierliche, Verfahren zur Herstellung der TPU kann somit derart erfolgen, daß in einem gleichsinnig drehenden Zweiwellenextruder das harte TPU zunächst aufgeschmolzen und mit niedermolekularem Diol unter Mitwirkung des Katalysators zu einem Präpolymeren mit Hydroxyl-Endgruppen umgewandelt wird, um dann unter Zusatz von (a) und bevorzugt (b) zu einem hochmolekularem, weichen TPU aufgebaut zu werden.

Das erfindungsgemäße Produkt des Schrittes (ii) kann extrudiert, abgekühlt und granuliert werden.

Die Verarbeitung der erfindungsgemäß hergestellten TPU zu den gewünschten Folien, Fasern, Formteile, Verkleidungen in Automobilen, Rollen, Dichtungen, Kabelstecker, Faltenbälge, Schläuche, Kabelummantelungen, Schleppkabel, Riemen oder Dämpfungselemente, insbesondere Folien, kann nach üblichen Verfahren erfolgen, wie z.B. Spritzguß, Extrusion, Spinnverfahren oder Sinterverfahren, das auch als Powder-slush-Verfahren bekannt ist.

Die nach den erfindungsgemäßen Verfahren herstellbaren thermoplastischen Polyurethane, insbesondere die Folien, Fasern, Formteile, Verkleidungen in Automobilen, Rollen, Dichtungen, Kabelstecker, Faltenbälge, Schläuche, Kabelummantelungen, Schleppkabel, Riemen oder Dämpfungselemente, insbesondere Folien weisen wie gewünscht besonders hohe mechanische Eigenschaften und Abriebfestigkeiten auf, die in diesem Maße von anderen Kunststoffen im Härtebereich Shore 45 - 70 A nicht erreicht werden. Die bei der Herstellung der TPU üblicherweise verwendeten Komponenten (a), (b), (c), (d) und/oder (e) sollen im Folgenden beispielhaft beschrieben werden:
a) Als organische Isocyanate (a) werden übliche aliphatische, cycloaliphatische, araliphatische und/oder aromatische Isocyanate, bevorzugt Diioscyanate eingesetzt, beispielsweise Tri-, Tetra-, Penta-, Hexa-, Hepta- und/oder Oktamethylendiisocyanat, 2-Methyl-pentamethylen-diisocyanat-1,5, 2-Ethylbutylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat, 4,4'-, 2,4'- und/oder 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat.
b) Als gegenüber Isocyanaten reaktive Verbindungen (b) können 5 beispielsweise Polyhydroxylverbindungen, auch als Polyole bezeichnet, mit Molekulargewichten von 701 bis 8000, bevorzugt 701 bis 6000, insbesondere 800 bis 4000, und bevorzugt einer mittleren Funktionalität von 1,8 bis 2,6, bevorzugt 1,9 bis 2,2, insbesondere 2 eingesetzt werden. Bevorzugt setzt man als (b) Polyesterole und/oder Polyetherole und/oder Polycarbonatdiole ein, besonders bevorzugt Polyesterdiole, beispielsweise Polycaprolacton, und/oder Polyetherpolyole, beispielsweise solche auf der Basis von Ethylenoxid, Propylenoxid und/oder Butylenoxid, bevorzugt Polypropylenglykol, insbesondere Polyetherole.
c) Als Diole (c) können allgemein als Kettenverlängerer bekannte Verbindungen eingesetzt werden, beispielsweise Alkandiole, Alkendiole, Alkindiole, jeweils mit 2 bis 12 Kohlenstoffatomen, vorzugsweise mit 2, 3, 4 oder 6 Kohlenstoffatomen, Dialkylenetherglykole, Diester der Terephthalsäure mit Alkandiolen mit 2 bis 4 Kohlenstoffatomen, Hydroxyalkylenether des Hydrochinons, Di-, Tri-, Tetra-, Penta-, Hexa-, Hepta-, Okta-, Nona- und/oder Dekaoxyalkylenglykole mit 3 bis 8 Kohlenstoffatomen im entsprechenden Oxyalkylenrest, wobei auch Mischungen der genannten Verbindungen eingesetzt werden können. Beispielhaft seien folgende Verbindungen genannt: Ethandiol, Propan-1,2- und/oder -1,3-diol, Hexandiol-1,6, Butandiol-1,4, cis- und/oder trans-1,4-Butendiol, Diethylenglykol, Dipropylenglykol, Terephthalsäure-bis-ethandiol und/oder -butandiol-1,4, 1,4-Di-(β-hydroxyethyl)-hydrochinon, 1,4-Bis-(hydroxymethyl)-benzol (BHMB), 1,3-Bis-(hydroxymethyl)-benzol, 1,2-Bis-(hydroxymethyl)-benzol, 1,2-Bis-(2-hydroxyethoxy)-benzol, 1,3-Bis-(2-hydroxyethoxy)-benzol, 1,4-Bis-(2-hydroxyethoxy)-benzol (HQEE). Bevorzugt werden als (c) Ethandiol, Propan-1,3-diol, Butandiol 1-4 und/oder Hexandiiol-1,6 verwendet.
d) Geeignete Katalysatoren, welche insbesondere die Reaktion zwischen den NCO-Gruppen der Diisocyanate (a) und den Hydroxylgruppen der Aufbaukomponenten (b) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester oder die an späterer Stelle beschriebenen Verbindungen. Abgesehen von der Umsetzung im Schritt (i) werden die Katalysatoren üblicherweise in Mengen von 0,0001 bis 5 Gew.-Teilen pro 100 Gew.-Teile Polyhydroxylverbindung (b) eingesetzt. Geeignete Katalysatoren, welche die Abbaureaktion der harten TPU mit der Komponente (c) beschleunigen, sind insbesondere organische Metallverbindungen wie Titansäureester, z.B. Tetrabutylortholinanat, Eisenverbindungen wie z.B. Eisen-(III)-acetylacetonat, Zinnverbindungen, z.B. Zinndiacetat, Zinndioctoat, Zinndilaurat oder die Zinndialkylalze aliphatischer Carbonsäuren wie Dibutylzinndiacetat, Dibutylzinndilaurat oder ähnliche.
e) Neben Katalysatoren können den Aufbaukomponenten (a) und (b) auch übliche Hilfsmittel und/oder Zusatzstoffe (e) hinzugefügt werden. Genannt seien beispielsweise oberflächenaktive Substanzen, Flammschutzmittel, Antistatika, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Nähere Angaben über die oben genannten Hilfsmittel- und Zusatzstoffe sind der Fachliteratur zu entnehmen.

Alle in dieser Schrift genannten Molekulargewichte weisen die Einheit [g/mol] auf.

Die erfindungsgemäßen Vorteile sollen anhand der folgenden Beispiele dargestellt werden.

### Beispiele

Die nachfolgend beschriebenen Beispiele 1 bis 16 wurden auf einem Doppelschneckenextruder Typ ZSK 58 der Firma Werner und Pfleiderer hergestellt. Die Länge des Extruderverfahrensteils betrug 12 Gehäuse, die Länge des Gehäuse selbst war der 4fache Schneckendurchmesser. Der Schmelzeaustrag aus dem Extruder wurde mittels einer Zahnradpumpe durchgeführt, die Granulierung erfolgte in einer üblichen Unterwassergranuliereinrichtung. Das anfallende Granulat wurde dann in einem Wirbelbett-Trockner bei Temperaturen von 90 bis 110°C und Verweilzeiten von 5 bis 10 min auf Wassergehalte < 0,03 % getrocknet und anschließend 15 Stunden bei 80°C getempert. Die Temperaturen der Extrudergehäuse 1 bis 3 betrugen 250°C, der Gehäuse 4 bis 5 230°C, der Gehäuse 6 bis 12, einschließlich der Schmelzeaustragseinrichtung, 220°C. Unter diesen Bedingungen resultierte bei einem Durchsatz von ca. 200 kg/h und einer Drehzahl von 200 Upm eine Schmelzetemperatur von 200 bis 210°C. Die verwendeten harten TPU-Produkte (TPU 1-3) für den Schritt (i) wurden nach dem Bandverfahren hergestellt und basierten auf einem Polyesterdiol, Molekulargewicht 2000, aus Adipinsäure und Butandiol-Hexandiol im Molverhältnis 2 : 1, auf Butandiol als Kettenverlängerer und auf 4,4'-Diisocyanatodiphenylmethan als aromatischen Diisocyanat. Die entsprechenden TPU sind in der Tabelle 1 dargestellt.

**Tabelle 1**

| Produkt | Molverhältnis | Härte |
|---|---|---|
| | Butandiol : Polyesterdiol | |
| | | |
| TPU 1 | 5,20 : 1 | Shore 52 D |
| TPU 2 | 4,56 : 1 | Shore 47 D |
| TPU 3 | 4,08 : 1 | Shore 41 D |

Im Beispiel 1 wird zunächst der Abbau eines hochmolekularen, harten TPU durch Butandiol zu einem Präpolymer mit OH-Endgruppen beschrieben.

In das Gehäuse 1 des Doppelschneckenextruders Typ ZSK 58 wurden zunächst 70 kg/h TPU 1 kontinuierlich zudosiert und aus dem offenen Gehäuse 5 Schmelzeproben (Probe 1 entnommen.

Für die Probe 2 wurde gemäß Probe 1 verfahren, allerdings wurden in Gehäuse 3 2,10 kg/h Butandiol und 4,0 g/h Zinn-dioctoat zudosiert und ebenfalls aus dem offenen Gehäuse 5 Schmelzeproben (Probe 2) entnommen. Diese Probe 2 wurde zerkleinert, mehrfach mit Methanol bei 50°C gerührt, um möglicherweise nicht umgesetztes Butandiol zu extrahieren, und das Ungelöste nach Filtration bei 100°C im Wärmeschrank getrocknet. Die Charakterisierung der Proben 1 und 2 erfolgte einmal durch Messung der Viskosität einer 10 %igen Lösung in DMF + 1 % N-Dibutylamin und durch DSC-Messungen. Außerdem wurden an Probe 2 OH- und Säureendgruppen nach üblichen analytischen Methoden bestimmt. Die Meßergebnisse sind in der Tabelle 2 dargestellt.

Es gelten die folgenden Abkürzungen und Definitionen:
- Bsp:: Beispiel
- Lös.-Vis.:: Lösungsviskosität
- Zugfestigkeit:: gemessen nach DIN 53504
- Reißdehnung:: gemessen nach DIN 53504
- Weiterreißfest.:: Weiterreißfestigkeit, gemessen nach DIN 53515
- Abrieb:: gemessen nach DIN 53516

**Tabelle 2**

| | Lös.-Vis. | DSC-Messung | | | | | Endgruppengehalt | |
|---|---|---|---|---|---|---|---|---|
| | (mPa.s) | Peak 1 [°C] | Peak 2 [°C] | Peak 3 [°C] | Tₖmax [°C] | Delta H [J/g] | [mmol/kg] Hydroxyl | Säure |
| | | | | | | | | |
| Probe 1 | 70 | 186 | 199 | 210 | 131 | 8,7 | - | - |
| | | | | | | | | |
| Probe 2 | 11 | - | 190 | 210 | 133 | 18,9 | 535 | 35 |

Der Abfall der Lösungsviskosität sowie die Endgruppengehalte zeigen, daß Probe 2 ein deutlich niedrigeres Molekulargewicht aufweist als Probe 1. Aufgrund der Endgruppengehalte kann es auf ca. 3500 geschätzt werden. Das eingesetzte TPU wurde somit erfindungsgemäß durch das eingesetzte Butandiol gespalten.

Die Peakmaxima der 2. Aufheizkurve beider Proben zeigen eine ähnliche Lage. Infolge des geringeren Molekulargewichtes von Probe 2 erfolgt eine schnellere Kristallisation beim Abkühlen, so daß die Schmelzeenthalpie Delta H der Probe 2 mit 18,9 J/g deutlich höher liegt als die der hochmolekularen Probe 1. Die Hartphasen der gespaltenen Probe kristallisieren somit wie gewünscht in hervorragender weise.

Die Beispiele 2 bis 16 mit der Ausnahme von Beispiel 8, das ein Vergleichsbeispiel darstellt, beschreiben die erfindungsgemäßen Schritte (i) und (ii) zur Herstellung der erfindungsgemäßen TPU.

Für die Umsetzung dieser harten TPU auf dem Reaktionsextruder nach dem erfindungsgemäßen Verfahren wurde in den Beispielen 2 bis 16 ein Polyesterdiol, Molekulargewicht 2000, aus Adipinsäure und Ethylenglykol - Butandiol im Molverhältnis 1 : 1 verwendet, das in den Tabelle mit "Polyesterdiol" gekennzeichnet ist.

Zur Bestimmung der mechanischen Eigenschaften wurden die Versuchsprodukte in üblicher Weise im Spritzguß zu Prüfkörpern verarbeitet, die vor der Prüfung 20 Stunden bei 100°C getempert wurden.

In den folgenden Beispielen 2 bis 5 wird der Einfluß des Molverhältnisses von MDI zur Summe (Butandiol + Polyesterdiol) aufgezeigt.

**Tabelle 3**

| Rezepturen der Beispiele 2 bis 5 | | | | | | | |
|---|---|---|---|---|---|---|---|
| Bsp | TPU 2 | Butandiol | Zinndioctoat | | Polyesterdiol | MDI | Molverhältnis |
| | | | Nr.1 | Nr.2 | | | MDI/(Butandiol + Polyesterdiol) |
| | [kg/h] | [kg/h] | [g/h] | | [kg/h] | [kg/h] | |
| 2 | 70 | 2,10 | 4,0 | 4,0 | 116 | 21,16 | 1,04 |
| 3 | 70 | 2,10 | 4,0 | 4,0 | 116 | 21,57 | 1,06 |
| 4 | 70 | 2,10 | 4,0 | 4,0 | 116 | 21,97 | 1,08 |
| 5 | 70 | 2,10 | 4,0 | 4,0 | 116 | 22,38 | 1,10 |

Zur Durchführung dieser Beispiele wurde das Gehäuse 5 des Extruders verschlossen und an dieser Stelle Polyesterdiol, MDI und Zinn-dioctoat Nr. 2 kontinuierlich zudosiert.

Zinn-dioctoat Nr. 1 diente der Beschleunigung der Abbaureaktion. Zinn-dioctoat Nr. 2 diente der Beschleunigung der Aufbaureaktion.

Die Eigenschaften der Produkte der Beispiele 2 bis 5 sind in der Tabelle 4 dargestellt.

**Tabelle 4**

| Bsp | Härte | Zugfestigkeit | Reißdehnung | Weiterreißfest. | Abrieb | Lös.-Vis. |
|---|---|---|---|---|---|---|
| | Shore A | [Mpa] | [%] | [N/mm] | [mm³] | [mPa.s] |
| | | | | | | |
| 2 | 66 A | 19 | 1010 | 42 | 206 | 37 |
| 3 | 68 A | 26 | 910 | 50 | 111 | 73 |
| 4 | 70 A | 37 | 780 | 54 | 49 | 120 |
| 5 | 70 A | 36 | 680 | 56 | 56 | 144 |

In den folgenden Beispielen 5* bis 8 wird der Einfluß der Butandiol-Menge aufgezeigt. Das Molverhältnis MDI zu Summe (Butandiol + Polyesterdiol) beträgt in diesen Fällen 1,10.

**Tabelle 5**

| Rezepturen der Beispiele 5* bis 8 | | | | | | |
|---|---|---|---|---|---|---|
| Bsp | TPU 2 | Butandiol | Zinndioctoat | | Polyesterdiol | MDI |
| | | | Nr.1 | Nr.2 | | |
| | [kg/h] | [kg/h] | [g/h] | [g/h] | [kg/h] | [kg/h] |
| 5* | 70 | 2,10 | 4,0 | 4,0 | 116 | 22,38 |
| 6 | 70 | 1,40 | 4,0 | 4,0 | 116 | 20,24 |
| 7 | 70 | 0,70 | 4,0 | 4,0 | 116 | 18,10 |
| 8 | 70 | - | - | 4,0 | 116 | 15,97 |

**Tabelle 6**

| Eigenschaften der Produkte der Beispiele 5 bis 8 | | | | | | |
|---|---|---|---|---|---|---|
| Bsp | Härte | Zugfestigkeit | Reißdehnung | Weiterreißfest. | Abrieb | Lös.Vis. |
| | Shore | [MPa] | [%] | [N/mm] | [mm³] | [mPa.s] |
| 5* | 70 A | 36 | 680 | 56 | 47 | 144 |
| 6 | 68 A | 38 | 830 | 53 | 54 | 153 |
| 7 | 65 A | 35 | 880 | 50 | 59 | 144 |
| 8 | 56 A | 10 | 800 | 15 | 450 | 120 |

Beispiel 8 zeigt die Ergebnisse des Vergleichsbeispiels. Das Produkt war so stark klebend, daß die Unterwassergranulierung nur für kurze Zeit wegen massiver Verklumpungen zu betreiben war. Auch die Prüfkörperherstellung im Spritzguß war nur mit großer Mühe möglich und wurde nur durchgeführt, um einen Eigenschaftsvergleich mit den erfindungsgemäßen Produkten zu ermöglichen. Dagegen zeigen die erfindungsgemäßen Produkte wie gewünscht die hervorragenden mechanischen Eigenschaften, insbesondere unerwartet gute Zugfestigkeiten, Weiterreißfestigkeiten und Abriebwerte.

In den folgenden Beispielen 9 bis 16 werden der Einfluß von Rezeptur und Einsatzmenge des harten TPU auf die resultierenden Produkteigenschaften aufgezeigt. Die Butandiol-Menge beträgt jeweils 3 %, bezogen auf die TPU-Menge, das Molverhältnis MDI zu Summe (Butandiol + Polyesterdiol) jeweils 1.10 und die Zinndioctoat-Nr. 1- und Nr. 2-Mengen jeweils 4,0 g/h.

**Tabelle 7**

| Rezepturen der Beispiele 5 und 9 bis 16 | | | | | |
|---|---|---|---|---|---|
| Bsp | TPU | | Butandiol | Polyesterdiol | MDI |
| | Typ | Menge | | | |
| | | | | | |
| 9 | TPU 1 | 70 kg/h | 2,10 kg/h | 116 kg/h | 22,38 kg/h |
| 10 | TPU 1 | 60 kg/h | 1,80 kg/h | 124 kg/h | 22,57 kg/h |
| 11 | TPU 1 | 50 kg/h | 1,50 kg/h | 133 kg/h | 22,89 kg/h |
| | | | | | |
| 12 | TPU 2 | 60 kg/h | 1,80 kg/h | 124 kg/h | 22,57 kg/h |
| 13 | TPU 2 | 50 kg/h | 1,50 kg/h | 133 kg/h | 22,89 kg/h |
| | | | | | |
| 14 | TPU 3 | 70 kg/h | 2,10 kg/h | 116 kg/h | 22,38 kg/h |
| 15 | TPU 3 | 60 kg/h | 1,80 kg/h | 124 kg/h | 22,57 kg/h |
| 16 | TPU 3 | 50 kg/h | 1,50 kg/h | 133 kg/h | 22,89 kg/h |

**Tabelle 8**

| Eigenschaften der Produkte der Beispiele 5 und 9 bis 16 | | | | | | |
|---|---|---|---|---|---|---|
| Bsp | Härte | Zugfestigkeit | Reißdehnung | Weiterreißfest. | Abrieb | Lös.-Vis. |
| | Shore | [MPa] | [%] | [N/mm] | [mm³] | [mPa.s] |
| | | | | | | |
| 9 | 73 A | 38 | 650 | 59 | 45 | 140 |
| 10 | 66 A | 34 | 760 | 48 | 55 | 160 |
| 11 | 58 A | 27 | 850 | 41 | 68 | 174 |
| | | | | | | |
| 12 | 63 A | 33 | 780 | 46 | 55 | 170 |
| 13 | 55 A | 25 | 1030 | 38 | 80 | 178 |
| | | | | | | |
| 14 | 68 A | 35 | 720 | 54 | 60 | 125 |
| 15 | 62 A | 30 | 870 | 44 | 65 | 140 |
| 16 | 52 A | 21 | 1200 | 35 | 85 | 155 |

Die erfindungsgemäßen Beispiele zeigen deutlich, daß die gestellte Aufgabe durch die erfindungsgemäße technische Lehre gelöst werden konnte. Nicht nur die mechanischen Eigenschaften der TPU der Shore-Härte 45 bis 80 A sind auf einem hohen Niveau, auch die Verarbeitbarkeit der TPU in der Extrusion oder im Spritzguß bot erheblich weniger Probleme. Diese Ergebnisse sind desto überraschender, da harte TPU eingesetzt wurden, aus denen weiche TPU hergestellt wurden. Die Spaltung der harten TPU bei gleichzeitigem Erhalt der Hartphasen, die die sehr guten mechanischen Eigenschaften begründen, war nicht zu erwarten. Dies gilt auch für den Einbau dieser Spaltprodukte in den neuen TPU-Polymerketten, bestehend aus Diisocyanaten und bevorzugt Polyolen.

## Patentansprüche

1. Thermoplastische Polyurethane mit einer Shore-Härte von 45 A 5 bis 80 A, einer Zugfestigkeit nach DIN 53504 von größer 15 MPa, einer Weiterreißfestigkeit nach DIN 53515 von größer 30 N/mm und einem Abrieb nach DIN 53516 von kleiner 250 mm³, basierend auf der Umsetzung von thermoplastischen Polyurethanen mit einer Shore-Härte von 30 D bis 80 D, einem Diol (c), das ein Molekulargewicht von 62 bis 700 g/mol aufweist, einem Isocyanat (a) sowie Katalysatoren (d) und gegenüber Isocyanaten reaktiven Verbindungen (b) mit einem Molekulargewicht von 701 bis 8000.

2. Verfahren zur Herstellung von thermoplastischen Polyurethanen mit einer Shore-Härte von 45 A bis 80 A, **dadurch gekennzeichnet, daß** man in einem ersten Schritt (i) ein thermoplastisches Polyurethan mit einem Diol (c), das ein Molekulargewicht von 62 bis 700 g/mol aufweist, umsetzt und anschließend in einem weiteren Umsetzungsschritt (ii) das Umsetzungsprodukt aus (i) mit einem Isocyanat (a) sowie gegebenenfalls (b) gegenüber Isocyanaten reaktiven Verbindungen mit einem Molekulargewicht von 701 bis 8000, (c) Diolen mit einem Molekulargewicht von 62 bis 700, (d) Katalysatoren und/oder (e) Hilfs- und/oder Zusatzstoffen umsetzt.

3. Verfahren nach Anspruch 2, **dadurch gekennzeichnet, daß** das thermoplastische Polyurethan, das in dem Schritt (i) mit (c) umgesetzt wird, eine Shore-Härte von 30 D bis 80 D aufweist.

4. Verfahren nach Anspruch 2, **dadurch gekennzeichnet, daß** man die Umsetzung im Schritt (i) in Gegenwart von 0,1 bis 2 Gew.-% Katalysator, bezogen auf das Gewicht der Komponente (c) durchführt.

5. Verfahren nach Anspruch 2, **dadurch gekennzeichnet, daß** der Schritt (i) in einem Reaktionsextruder durchgeführt wird.

6. Verfahren nach Anspruch 5, **dadurch gekennzeichnet**, das der Reaktionsextruder in dem Bereich, in dem das thermoplastische Polyurethan geschmolzen wird, neutrale und/oder rückwärtsfördernde Knetblöcke und Rückförderelemente sowie in dem Bereich, in dem das thermoplastische Polyurethan mit (c) umgesetzt wird, Schneckenmischelemente, Zahnscheiben und/oder Zahnmischelemente in Kombination Rückförderelementen aufweist.

7. Verfahren nach Anspruch 2, **dadurch gekennzeichnet, daß** das Verhältnis der Isocyanatgruppen der Komponente (a) zu den Hydroxylgruppen der in den Schritten (i) und (ii) zugeführten Komponenten (b) und (c) 1,02 : 1 bis 1,2 : 1 beträgt.

8. Verfahren nach Anspruch 2, **dadurch gekennzeichnet, daß** sich die Komponente (b), die im Schritt (ii) eingesetzt werden kann, in der chemischen Struktur von dem Polyol, das zur Herstellung des im Schritt (i) eingesetzten thermoplastischen Polyurethans verwendet wurde, unterscheidet.

9. Folien, Formteile, Rollen, Fasern, Verkleidungen in Automobilen, Schläuche, Kabelstecker, Faltenbälge, Schleppkabel, Kabelummantelungen, Dichtungen, Riemen oder Dämpfungselemente enthaltend thermoplastische Polyurethane gemäß Anspruch 1.

## Claims

1. A thermoplastic polyurethane with a Shore A hardness of from 45 to 80, a tensile strength to DIN 53504 of above 15 MPa, a tear-propagation resistance to DIN 53515 of above 30 N/mm and abrasion to DIN 53516 of less than 250 mm³, based on reacting thermoplastic polyurethanes with a Shore D hardness of from 30 to 80 with a diol (c) which has a molar mass of from 62 to 700 g/mol, and with an isocyanate (a), and also catalysts (d) and compounds (b) having a molar mass of from 701 to 8000 g/mol and reactive to isocyanates.

2. A process for preparing thermoplastic polyurethanes with a Shore A hardness of from 45 to 80, which comprises reacting, in a first step (i), a thermoplastic polyurethane with a diol (c) which has a molar mass of from 62 to 700 g/mol, and then, in a further reaction step (ii), reacting the reaction product from (i) with an isocyanate (a) and also, if desired, with (b) compounds having a molar mass of from 701 to 8000 g/mol and reactive to isocyanates, and with (c) diols having a molar mass of from 62 to 700 g/mol, and with (d) catalysts and/or with (e) auxiliaries and/or additives.

3. A process as claimed in claim 2, wherein the thermoplastic polyurethane which is reacted with (c) in step (i) has a Shore D hardness of from 30 to 80.

4. A process as claimed in claim 2, wherein the reaction in step (i) is carried out in the presence of from 0.1 to 2% by weight of catalyst, based on the weight of component (c).

5. A process as claimed in claim 2, wherein step (i) is carried out in a reaction extruder.

6. A process as claimed in claim 5, wherein the reaction extruder has neutral and/or backward-conveying kneading blocks and back-conveying elements in the area in which the thermoplastic polyurethane is melted, and has mixing elements on the screw, and toothed disks and/or toothed mixing elements in combination with back-conveying elements in the area in which the thermoplastic polyurethane is reacted with (c).

7. A process as claimed in claim 2, wherein the ratio between the isocyanate groups of component (a) and the hydroxyl groups of the components (b) and (c) introduced in steps (i) and (ii) is from 1.02:1 to 1.2:1.

8. A process as claimed in claim 2, wherein the component (b) which can be used in step (ii) differs in its chemical structure from the polyol used to prepare the thermoplastic polyurethane used in step (i)

9. A film, a molding, a roller or pulley, a fiber, a lining in an automobile, a tube, a cable plug, a folding bellows, a drag cable, a cable sheathing, a gasket, a drive belt or an attenuating element comprising a thermoplastic polyurethane as claimed in claim 1.

## Revendications

1. Polyuréthanes thermoplastiques avec une dureté Shore de 45 A à 80 A, un résistance à la traction selon DIN 53504 de plus de 15 MPa, une résistance à la propagation des fissures selon DIN 53515 de plus de 30 N/mm et une abrasion selon DIN 53516 de moins de 250 mm³, basés sur la conversion de polyuréthanes thermoplastiques avec une dureté Shore de 30 D à 80 D, d'un diol (c) qui présente un poids moléculaire de 62 à 700 g/mole, d'un isocyanate (a) ainsi que de catalyseurs (d), et de composés (b) avec un poids moléculaire de 701 à 8000, qui réagissent par rapport aux isocyanates.

2. Procédé de production de polyuréthanes thermoplastiques avec une dureté Shore de 45 A à 80 A, **caractérisé en ce que** l'on convertit, dans une première étape (i), un polyuréthane thermoplastique avec un diol (c), qui présente un poids moléculaire de 62 à 700 g/mole, et on convertit ensuite, dans une autre étape de conversion (ii), le produit de conversion de (i) avec un isocyanate (a) ainsi que le cas échéant des composés (b) avec un poids moléculaire de 701 à 8000 qui réagissent par rapport aux isocyanates, des diols (c) avec un poids moléculaire de 62 à 700, des catalyseurs (d) et/ou des substances consommables et/ou des additifs (e).

3. Procédé suivant la revendication 2, **caractérisé en ce que** le polyuréthane thermoplastique, que l'on convertit avec (c) dans l'étape (i), présente une dureté Shore de 30 D à 80 D.

4. Procédé suivant la revendication 2, **caractérisé en ce que** l'on effectue la conversion dans l'étape (i) en présence de 0,1 à 2 % en poids de catalyseur, rapportés au poids des composants (c).

5. Procédé suivant la revendication 2, **caractérisé en ce que** l'étape (i) est effectuée dans une extrudeuse de réaction.

6. Procédé suivant la revendication 5, **caractérisé en ce que** l'extrudeus de réaction présente, dans la région dans laquelle le polyuréthane thermoplastique est fondu, des blocs de malaxage neutres et/ou de transport inversé et des éléments de retour ainsi que, dans la région dans laquelle le polyuréthane thermoplastique est converti avec (c), des éléments de mélange à vis, des disques dentés et/ou des éléments de mélange dentés en combinaison avec des éléments de retour.

7. Procédé suivant la revendication 2, **caractérisé en ce que** le rapport entre les groupes isocyanate des composants (a) et les groupes hydroxyle des composants (b) et (c) ajoutés dans les étapes (i) et (ii) vaut de 1,02:1 à 1,2:1.

8. Procédé suivant la revendication 2, **caractérisé en ce que** les composants (b), qui peuvent être utilisés dans l'étape (ii), se différencie par leur structure chimique du polyol, qui a été utilisé pour la fabrication du polyuréthane thermoplastique employé dans l'étape (i).

9. Films, pièces moulées, rouleaux, fibres, habillages d'automobiles, tuyaux, fiches de câbles, soufflets pliants, câbles de remorquage, gaines de câbles, garnitures d'étanchéité, courroies ou éléments d'amortissement contenant des polyuréthanes thermoplastiques suivant la revendication 1.
